# EUROPEAN PATENT APPLICATION

(11) **EP 1 604 575 A1**
(43) Date of publication of application: **14.12.2005**
(21) Application number: 03710303.3
(22) Date of filing: 12.03.2003
(51) Int. Cl.: A23L 1/31, A23L 3/3499, A23B 4/00

(54) **METHOD OF STERILIZING POULTRY MEAT**

(71) Applicant: Osaka Organic Chemical Ind. Co.,Ltd., Osaka-shi, Osaka 541-0052 (JP)
(72) Inventor: IWAI, Kazuo, 1221-1, Oaza Koshinohara, Yasu-gun, Shiga 520-2331 (JP); MORITA, Yasuhiro, Sakai-shi, Osaka 591-8021 (JP); URA, Kaori, Arida-gun, Wakayama 643-0122 (JP)
(74) Representative: Vossius & Partner
(86) International application number: PCT/JP2003/002891
(87) International publication number: WO 2004/080211

(57) **Abstract**

The present invention provides a method of sterilizing poultry meat comprising the step of subjecting poultry meat to a contact treatment with an aqueous hinokitiol solution in poultry processing for a production of poultry meat.

## Description

### TECHNICAL FIELD

The present invention relates to a method of sterilizing poultry meat.

### BACKGROUND ART

There are periodic reports on generation of food poisoning associated with poultry meat in many of countries every year. The main causation thereof is microorganism pollution, namely the pollution caused by pathogenic bacteria such as *Salmonella spp., Staphylococcus aureus, Clostridium perfringens, Campylobacter spp., Bacillus Cerius, Shigella spp*. and the like.

In general, control of microorganisms in the poultry processing has been difficult. This is due to existence of problems in the poultry processing which are different from those in the case of other edible animals, such that microorganisms are easily diffused due to high-speed treatment of a lot of poultry, that slaughtered bodies are left as a whole during the processing, that it is difficult to remove viscera through a relatively small opening in the abdomen without damaging intestine, that it is difficult to eliminate microorganisms due to the presence of skin, and that a large number of holes are formed after defeathering.

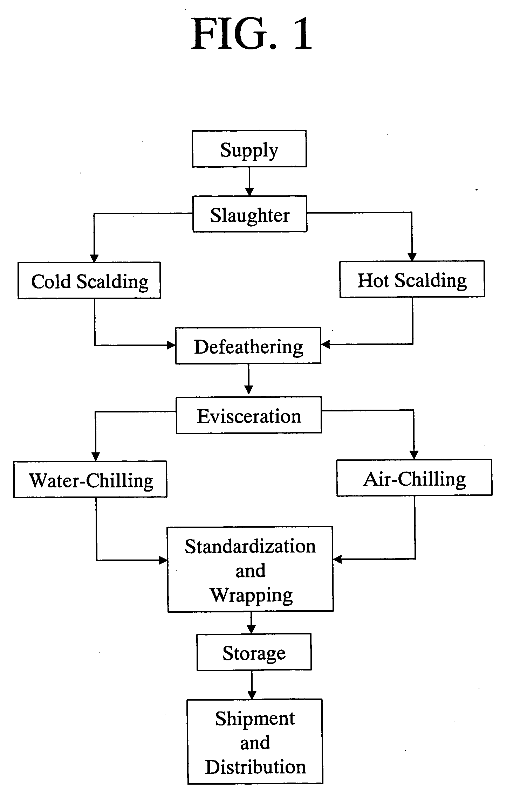

Microorganism pollution of a poultry meat product occurs during transportation of poultry or at any stages in the poultry processing. A general example of poultry processing steps is shown in Figure 1. Microorganisms are also brought to the product from air, water for the processing, ice, apparatus and operating persons. Control of microorganisms in these processing steps is generally carried out by adjustment of temperature and pH of water for the processing, maintenance of working environments, temperature control in storage and transportation, and the like. A high-pressure spraying, chlorine or the like is used particularly in steps of defeathering, evisceration and chilling among the processing steps, which is concretely used in (1) a method comprising adding sodium hypochlorite to chilled water to be used in a chilling step; (2) a method comprising spraying a mixed solution of sodium hypochlorite and an organic acid before a chilling step; (3) a method comprising immersing into or spraying a mixed solution of a tertiary phosphate and an organic acid before a chilling step; and (4) a method comprising spraying sodium hypochlorite or an analogous chlorine-based bactericide after a chilling step.

However, although the method (1) has an effect on sterilization of bacteria in water and is effective for prevention of cross contamination, the method is insufficient for sterilization of bacteria deposited to the surface of poultry meat (which may be hereinafter referred to deposited bacteria in some cases) because chlorine is inactivated rapidly when chlorine contacts with poultry meat, and consequently, poultry meat is shipped with bacteria remaining. Although the method (2) has a high sterilization effect, there is a risk of generation of a harmful chlorine gas. Therefore, there is a risk that the gas affects detrimentally on human body and equipments. Further, since a bactericide is removed in the chilling step, a sterilization effect cannot be expected in steps after the chilling step. The method (3) has problems of environmental pollution by phosphorus and a detrimental effect on taste of poultry meat. While the method (4) has a high sterilization effect, elimination of a bactericide from poultry meat is required due to toxicity of the bactericide itself. Therefore, a sterilization effect cannot be expected in steps after the sterilization step.

As described above, conventional methods of sterilizing poultry meat exhibit a sterilization effect only in given steps of poultry processing for the production of poultry meat, and cannot exhibit the effect continuously in steps after a chilling step. Therefore, although a sterilization treatment is carried out, bacterial pollution and proliferation are again permitted in steps after a chilling step, so that sterilization of a product poultry meat may be insufficient in some cases. Therefore, there has been desired the development of a method of sterilizing poultry meat which can continuously and effectively exhibit a sterilization effect particularly in steps after the chilling step.

An object of the present invention is to provide such a method of sterilizing poultry meat, and more specifically, to provide a method of sterilizing poultry meat capable of sterilizing poultry meat safely and simply, and continuously and effectively.

### DISCLOSURE OF INVENTION

As a result of intensive studies in view of solving the above problems, the present inventors have found that the contact treatment of poultry meat with an aqueous hinokitiol solution is effective for solving the above problems. The present invention has been perfected thereby.

Specifically, the present invention relates to:
[1] a method of sterilizing poultry meat comprising the step of subjecting poultry meat to a contact treatment with an aqueous hinokitiol solution in poultry processing for a production of poultry meat;
[2] the method according to the above [1], wherein the contact treatment is carried out at least in one step in the poultry processing comprising plural treatment steps, and/or in one interval between consecutive two steps in the treatment steps;
[3] the method according to the above [2], wherein the treatment step is selected from the group consisting of an evisceration step, a chilling step and a wrapping step;
[4] the method according to the above [3], wherein the contact treatment is carried out in the interval between the evisceration step and the chilling step;
[5] the method according to the above [3] or [4], wherein the contact treatment is carried out in the chilling step and/or in the interval between the chilling step and the wrapping step;
[6] the method according to any one of the above [1] to [5], wherein the concentration of hinokitiol in the aqueous hinokitiol solution is from 1 to 50000 ppm;
[7] the method according to any one of the above [1] to [6], wherein the aqueous hinokitiol solution has a pH of 4 to 11;
[8] the method according to any one of the above [1] to [7], wherein the contact treatment is carried out at a temperature of 0° to 70°C;
[9] the method according to any one of the above [1] to [8], wherein the contact treatment is carried out by at least one selected from the group consisting of applying a coat, spraying, rubbing and immersion; and
[10] a method for producing poultry meat comprising the step of sterilizing poultry meat by the method according to any one of the above [1] to [9] in poultry processing.

### BRIEF DESCRIPTION OF THE DRAWINGS

Figure 1 is a flow chart of general example of poultry processing.
Figure 2 is a graph showing the results for the test of bacteriocidal activity of an aqueous hinokitiol solution, wherein CPU in the ordinate axis of the graph means "viable cell ratio."
Figure 3 is a graph showing the results for the test of contact treatment of an aqueous hinokitiol solution with chicken meat deposited with *Escherichia coli* O157:H7.
Figure 4 is a graph showing the results for the test of contact treatment of an aqueous hinokitiol solution with chicken meat deposited with *Salmonella typhimurium*.
Figure 5 is a graph showing the results for the test of contact treatment of an aqueous hinokitiol solution with chicken meat deposited with *Listeria monocytogenes*.
Figure 6 is a graph showing the results for the test of contact treatment of an aqueous hinokitiol solution with chicken meat deposited with *Staphylococcus aureus*.
Figure 7 is a graph showing the results for the test of contact treatment of an aqueous hinokitiol solution with chicken meat deposited with *Campylobacter coli.*

### BEST MODE FOR CARRYING OUT THE INVENTION

One of the greatest characteristics of the method of sterilizing poultry meat of the present invention resides in that in the poultry processing for a production of poultry meat, the poultry meat is subjected to a contact treatment with an aqueous hinokitiol solution. Since the present invention has the above constitution, the poultry meat can be sterilized safely and simply, and more continuously and effectively as compared with those of conventional methods.

In other words, since the aqueous hinokitiol solution used in the present invention exhibits an excellent effect on sterilization of poultry meat, poultry meat can be sterilized simply only by contacting poultry meat with the above-mentioned aqueous solution, for example, immersing poultry meat into the above-mentioned aqueous solution. Since there are various problems in the poultry processing different from those of other edible animals as described above, control of microorganisms in the poultry processing is generally difficult. However, poultry meat can be sterilized efficiently, because an aqueous hinokitiol solution exhibits an excellent sterilization effect, and a contact treatment using the above-mentioned aqueous solution can be carried out very simply even over all sorts of poultry meat. In addition, since hinokitiol contained in the aqueous hinokitiol solution is a component derived from natural materials and also excellent in safety, poultry meat after the contact treatment has no toxicity or extremely low toxicity, so that there is no necessity for removing hinokitiol or the aqueous hinokitiol solution from the poultry meat after the contact treatment. Therefore, an excellent sterilization effect is exhibited continuously even in steps after the sterilization step. Also, there would not be any changes in color, taste or the like of poultry meat by the contact treatment of poultry meat with the aqueous hinokitiol solution. Additionally, there would be no influences on human body, equipments, environment and the like suspected in conventional methods.

The hinokitiol used in the present invention may be a naturally derived material or a synthetic material. Also, the hinokitiol may be a purified product, or a composition containing hinokitiol. For example, an extract derived from natural plants can also be used. Further, a salt of hinokitiol can also be used.

The term "hinokitiol" is generally used as a generic name of β-thujaplicin, one isomer of thujaplicin. The aqueous hinokitiol solution in the present invention may contain other isomers thereof, α-thujaplicin and γ-thujaplicin, besides β-thujaplicin.

The raw material plants of hinokitiol include, for example, Thujopsis dolabrata var. hondae (Hiba), Chamaecyparis taiwanensis (Taiwanhinoki), Thujopsis dolabrata (Asunaro) and the like. Among them, Thujopsis dolabrata var. hondae (Hiba) is preferable from the viewpoint of easy availability. The extraction and purification of hinokitiol from raw material plants can be carried out by a known method. The above-mentioned extract includes, for example, essential oils obtained from the above-mentioned raw material plants (for example, Thujopsis dolabrata var. hondae (Hiba) (Hiba oil). On the other hand, a synthetic product can also be obtained by a known method. Commercially available products include, for example, those available from Takasago Perfume Co., Ltd. and Osaka Organic Chemical Ind., Ltd. As the salt of hinokitiol, for example, alkali metal salts such as sodium salts and potassium salts are preferable.

Water as a medium of the aqueous hinokitiol solution is not particularly limited. For example, tap water, distilled water, ion-exchanged water and the like can be used. The concentration of hinokitiol in the aqueous solution varies depending upon the degree of processing and freshness condition of poultry meat which is a subject for applying the method of sterilizing poultry meat of the present invention. The concentration can be appropriately adjusted so that the desired effects of the present invention are obtained. In general, the concentration is preferably from 1 to 50000 ppm, more preferably from 10 to 5000 ppm, still more preferably from 25 to 1000 ppm. The preparation of an aqueous hinokitiol solution can be carried out, for example, by mixing hinokitiol or the above-mentioned extract with water. The other components may be added to the solution as desired. For example, surfactants safe for human body, extracts from plants and the like may be added to the aqueous solution, from the viewpoint, for example, of increase in the solubility of hinokitiol in water. Here, the term "ppm" in the present specification shows a concentration of a solute in a solution expressed by the amount of the solute in mg contained in 1 L of the solution.

The poultry applicable for the method of sterilizing poultry meat of the present invention are not particularly limited. The poultry include, for example, chickens, drakes, turkeys, quails, ducks, herons, ostriches, emus and the like. The method of sterilizing poultry meat of the present invention is effective for sterilization of, for example, *Salmonella spp., Staphylococcus aureus, Escherichia coli* (for example, *E. coli* O157), *Listeria spp., Campylobacter spp.* and the like, which can be detected in poultry meat. Especially, the method is effective for sterilization of *Salmonella spp., Listeria spp.* and *E. coli* O157.

In the present specification, the phrase "subjecting poultry meat to a contact treatment with an aqueous hinokitiol solution" refers to, for example, preferably subjection of poultry meat to applying a coat, spraying or rubbing with an aqueous hinokitiol solution, or subjection of poultry meat to immersion in an aqueous hinokitiol solution The process is particularly limited as long as it is an operation capable of contacting poultry meat with an aqueous hinokitiol solution. Each of the above-mentioned embodiments for contact treatment may be used alone or in combination of two or more embodiments. In other words, it is preferable that the contact treatment is carried out by at least one selected from the group consisting of application of coating, spraying, rubbing and immersion. Further, in the contact treatment, it is preferable that an aqueous hinokitiol solution is contacted with the entire body of poultry meat. The spraying includes, for example, an embodiment of showering poultry meat with an aqueous hinokitiol solution; an embodiment of passing poultry meat under a shower of an aqueous hinokitiol solution; an embodiment of spraying an aqueous hinokitiol solution on poultry meat; and an embodiment in which poultry meat are maintained for a given time period in a given zone filled with a mist of an aqueous hinokitiol solution or passed through the zone. Further, the immersion includes, for example, an embodiment of maintaining poultry meat in or passing poultry meat through an aqueous hinokitiol solution.

pH of the aqueous hinokitiol solution used in the contact treatment is preferably from 4 to 11, more preferably from 6 to 8, from the viewpoint of obtaining an excellent effect for sterilizing poultry meat. Also, the treatment temperature is preferably from 0° to 70°C, more preferably from 0° to 60°C, even more preferably from 0° to 55°C, from the same viewpoint.

In the method of sterilizing poultry meat of the present invention, the above-mentioned contact treatment is carried out in the poultry processing for a production of poultry meat. The contact treatment is carried out preferably at least in one step in the poultry processing comprising plural treatment steps (embodiment A), and/or in one interval between consecutive two steps in the treatment steps (embodiment B).

In a preferred embodiment of the present invention, the "treatment step" is selected, for example, from the group consisting of an evisceration step, a chilling step and a wrapping step. The embodiments of the above-mentioned steps are not particularly limited as long as they can be understood in the field of poultry meat production and fields which are technologically related thereto. For example, the evisceration step comprises removing viscera; the chilling step comprises chilling poultry meat by immersing poultry meat in chilling water or exposing poultry meat to chilled air; and the wrapping step comprises taking a slaughtered body apart into portion units such as breasts, and thighs, and wrapping them, respectively.

In the embodiment A, the contact treatment can be carried out, for example, as described below. For example, in the evisceration step and the wrapping step, the contact treatment can be carried out by spraying an aqueous hinokitiol solution on poultry meat. On the other hand, in the chilling step, the contact treatment can be carried out by immersing poultry meat into an aqueous hinokitiol solution chosen as water for chilling the meat used in this step.

Particularly, it is more preferable to carry out the contact treatment in a chilling step. In the case where the contact treatment is carried out in a chilling step, when the poultry meat are, for example, immersed into chilled water as described above, the contact treatment can be easily carried out by using a chilled aqueous hinokitiol solution as chilled water used in the present invention. In the embodiment of the chilling step comprising exposing poultry meat to a chilled air, the contact treatment can be easily carried out under such conditions of appropriately carrying out at least one selected from the group consisting of applying a coat, rubbing and spraying with an aqueous hinokitiol solution onto poultry meat. In the case where the contact treatment is carried out by immersion, the contact time period of an aqueous hinokitiol solution and poultry meat is preferably from 5 to 10 minutes, more preferably from 5 to 30 minutes. In the case where the contact treatment is carried out by spraying, when, for example, poultry meat are passed through under a shower of an aqueous hinokitiol solution or poultry meat are maintained at a given time period in a given zone filled with a mist of an aqueous hinokitiol solution or are passed through the zone, the contact time period of an aqueous hinokitiol solution and poultry meat is preferably from 5 to 10 minutes, more preferably from 5 to 30 minutes.

In the embodiment B, the contact treatment can be carried out, for example, as described below. For example, it is preferable that a contact treatment is carried out in the interval between an evisceration step and a chilling step, or in the interval between a chilling step and a wrapping step as described below.

In the case where the contact treatment is carried out in the interval between the evisceration step and the chilling step, it is preferable that, for example, the contact treatment is carried out by spraying or immersion, and it is more preferable that the contact treatment is carried out by spraying. The preferred contact time period of an aqueous hinokitiol solution with poultry meat in this case is the same as those define above.

In the case where the contact treatment is carried out in the interval between the chilling step and the wrapping step, it is preferable that, for example, the contact treatment is carried out by immersion. Concretely, the following embodiments are exemplified.

In the case where the chilling step is carried out by using chilled water, a water film is formed on the surface of poultry meat and a large amount of water is retained in an abdominal cavity, which is formed by removing viscera. Therefore, pre-draining is carried out by, for example, applying vibration, rotation or the like to poultry meat over a period of about several dozens of seconds by any methods. By carrying out this step, the dilution of an aqueous hinokitiol solution used can be preferably prevented in the subsequent contact treatment.

The contact treatment is carried out by placing an aqueous hinokitiol solution into a vessel having a desired size depending upon the amount of poultry meat to be sterilized, and immersing poultry meat subjected to pre-draining into the aqueous hinokitiol solution in this vessel. For example, 1 kg of poultry meat are immersed in 3 L of an aqueous hinokitiol solution (hinokitiol concentration: 125 ppm) at 0°C for preferably from 5 to 10 minutes, more preferably from 5 to 30 minutes. It is preferable that the above-mentioned vessel is equipped with a stirrer, from the viewpoint of accelerating impregnation of an aqueous hinokitiol solution into poultry meat.

It is preferable that the draining of poultry meat is carried out after the contact treatment as post-draining in the same manner as the above-mentioned pre-draining, and that a surplus amount of the aqueous hinokitiol solution is recovered to reuse the solution in the above-mentioned contact treatment, from the economical viewpoint.

After the contact treatment is carried out as described above, a wrapping step is then carried out.

As described above, in the method of sterilizing poultry meat of the present invention, it is especially preferable that the contact treatment is carried out at least in one point selected from the group consisting of the interval between the evisceration step and the chilling step, the chilling step, and the interval between the chilling step and the wrapping step, from the viewpoint of obtaining desired effects of the present invention.

In addition, as one embodiment of the present invention, there is provided a method for producing poultry meat comprising the step of sterilizing poultry meat by the method of sterilizing poultry meat of the present invention in the poultry processing. According to the method for producing poultry meat mentioned above, poultry meat having higher safety which are highly sterilized as compared with those by conventional methods can be produced efficiently.

The hinokitiol used in the present invention has higher safety, and is accepted as a food additive, and the amount thereof is not limited by Shokuhin Eisei Ho (Japanese Food Sanitation Act). Therefore, the poultry meat can be sterilized safely according to the present invention. Further, an effect of sterilizing poultry meat can be indirectly enhanced by, for example, spraying an aqueous hinokitiol solution to equipments and working environments used for the poultry processing.

### EXAMPLES

The present invention will be described in further detail by means of the following examples without intending to limit the scope of the present invention thereto.

### Example 1 Test of Bacteriocidal Activity of Aqueous Hinokitiol Solution

An aqueous hinokitiol solution (pH 4 to 11) having a hinokitiol concentration of 500 ppm was prepared. The bacteriocidal activity of an aqueous hinokitiol solution on *Escherichia coli* at various pH values was tested by using the above aqueous solution as a test solution. The test method is as follows.

### (Test Method)

A test strain (*Escherichia coli* IFO 12529) cultured in a normal bouillon medium was 100-fold diluted with sterilized water. The amount 0.05 mL of this diluted solution was inoculated to each test solution (5 mL), and thoroughly stirred. The mixture was allowed to stand still at room temperature. After 10 minutes, a 0.1 mL portion of the mixed solution was added to 4.5 mL of physiological saline, and the mixture was then stirred, and immediately, the viable cell count in the physiological saline was determined. As a control, physiological saline was used in place of the test solution. The viable cell count was determined by *Eisei Shiken Ho, Chukai (Sanitation Test Method, Commentary)* (1990), Biseibutsu Shiken Ho (Microorganism Test Method), (3) Viable Cell Count, Section 1: Konshaku Heiban Baiyo Ho (Mixing-Dilution Plate Culture) (p 148).

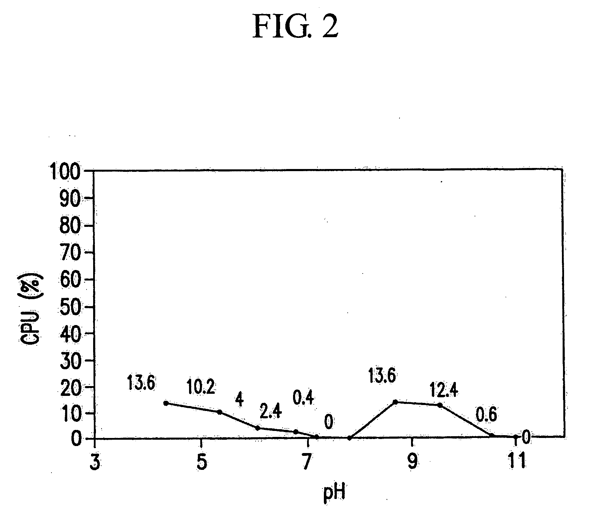

The results are shown in Figure 2. It is seen from Figure 2 that an aqueous hinokitiol solution having pH from 4 to 11 shows a sterilization effect on *Escherichia coli,* and especially an aqueous hinokitiol solution having pH from 6 to 8 shows an excellent sterilization effect on *Escherichia coli*.

### Example 2 Test of Contact Treatment of Aqueous Hinokitiol Solution to Chicken Meat Deposited with Pathogenic Bacteria

A sterilization effect of hinokitiol was evaluated by subjecting chicken meat deposited with pathogenic bacteria to a contact treatment with an aqueous hinokitiol solution [trade name; G Clean-f (hinokitiol concentration: 10000 ppm), manufactured by JCS, INC.]. The test method is as follows.

### (Test Method)

Ten milliliters of each suspension of various pathogenic bacteria given below was inoculated randomly at several points of 300 g of chicken meat in the processing (meat after a chilling step), and after the inoculation, the meat was frozen at a temperature from 4° to 6°C for 24 hours.

Various pathogenic bacteria used and the viable cell count per 1 mL of each of the various pathogenic bacterium suspensions are as follows.

| | |
|---|---|
| *Escherichia coli* O157:H7 (IFO 12529) | 1.933 × 10⁷ /mL |
| *Salmonella typhimurium* (IFO 3972) | 1.807 × 10⁶ /mL |
| *Listeria monocytogenes* (ATCC 7644) | 1.75 × 10⁶ /mL |
| *Staphylococcus aureus* (ATCC 25923) | 1.167 × 10⁶ /mL |
| *Campylobacter coli* (ATCC 43136) | 1.06 × 10⁶ /mL |

The chicken meat inoculated with each of the above-mentioned pathogenic bacterium suspensions was divided into three groups A, B and C, three pieces for each group. Subsequently, "A" was immersed in 3 L of ion-exchanged water at 10°C and stirred by a hand with a sterilized glove for 5 minutes. "B" was immersed into 3 L of an aqueous hypochlorite solution (50 mg/L) and stirred for 5 minutes in the same manner as above. "C" was immersed into 3 L of a 80-fold diluted aqueous solution of G Clean-f (pH 6.5) at 10°C and stirred for 5 minutes.

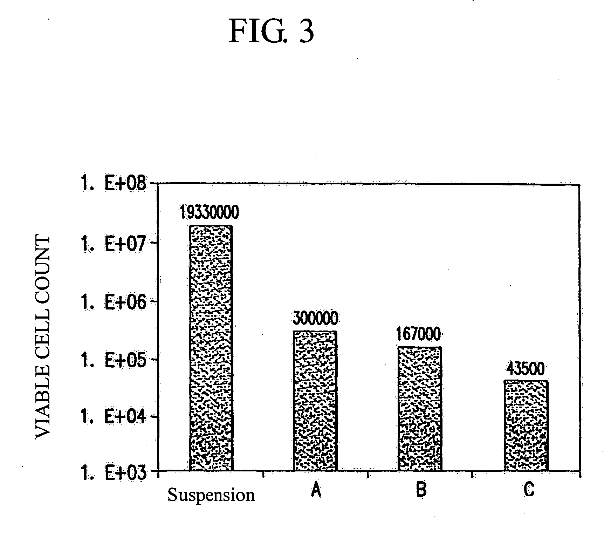

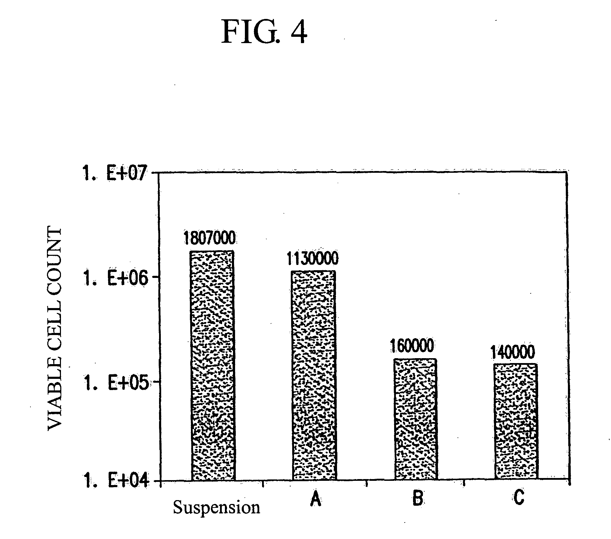

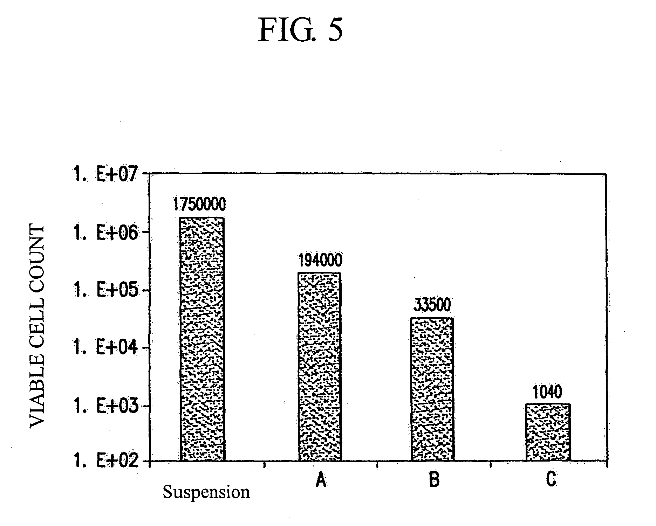

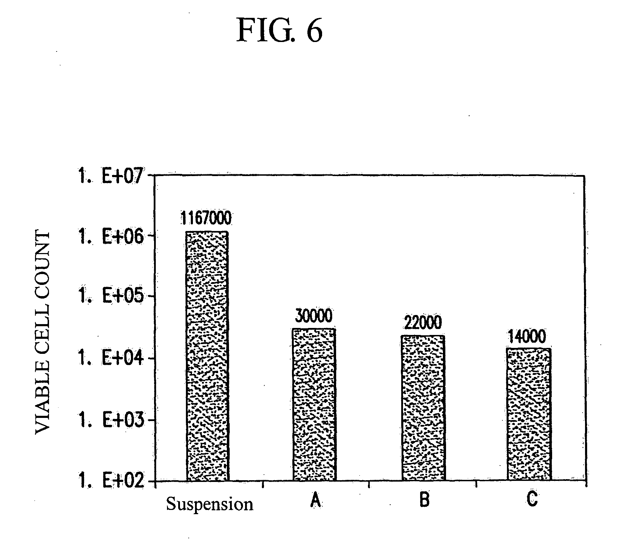

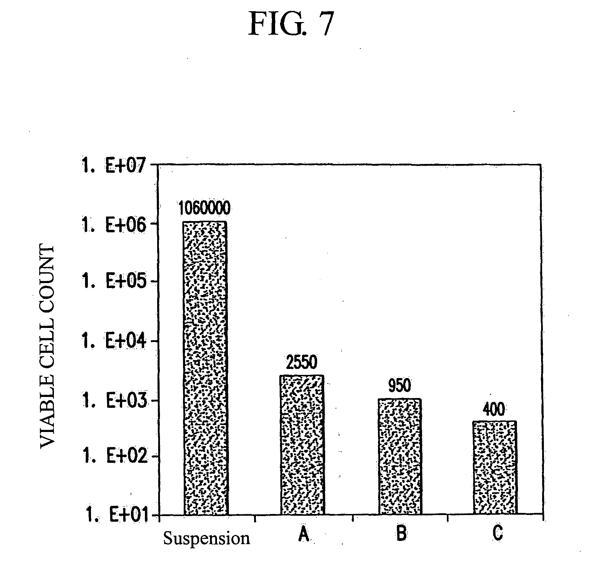

After immersion, the chicken meat was drained for 1 minute, and placed into a sterilized nylon bag containing 300 mL of Butterfield's phosphate buffer solution, and bacteria were suspended into the buffer to obtain test solution. This test solution was applied onto an agar medium in a petri dish, and the bacteria were cultured at 35°C for 24 to 48 hours. After culturing, the viable cell count was determined by a conventional method. The results are shown in Table 1 and Figures 3 to 7. In the table and figures, the viable cell count indicates the viable cell count per 1 mL of the pathogenic bacterium suspension or test solution.

**Table 1**

| Viable Cell Count | A | B | C |
|---|---|---|---|
| *E. coli* | 3.0 × 10⁵ /mL | 1.67 × 10⁵ /mL | 4.35 × 10⁴ /mL |
| *S. typhimurium* | 1.13 × 10⁶ /mL | 1.6 × 10⁵ /mL | 1.4 × 10⁵ /mL |
| *L. monocytogenes* | 1.94 × 10⁵ /mL | 3.35 × 10⁴ /mL | 1.04 × 10³ /mL |
| *S. aureus* | 3.0 × 10⁴ /mL | 2.2 × 10⁴ /mL | 1.4 × 10⁴ /mL |
| *Campylo. coli* | 2.55 × 10³ /mL | 9.5 × 10² /mL | 4.0 × 10² /mL |

It is seen from Table 1 and Figures 3 to 7 that a more excellent sterilization effect is obtained when the poultry meat are immersed into an aqueous hinokitiol solution as compared with those immersed into an aqueous hypochlorite solution used in conventional sterilization methods.

### Example 3 Influence 1 of Contact Treatment of Chicken Meat With Aqueous Hinokitiol Solution

The influence on meat color by the contact treatment of chicken meat with an aqueous hinokitiol solution was evaluated.

Specifically, the surface color of chicken breast meat, which had been raw or roasted, after the contact treatment with an aqueous hinokitiol solution was determined with a color-difference meter (CR-13, manufactured by MINOLTA CO., LTD.). An evaluation was made on the influence on meat color by comparing the meat subjected to a contact treatment with an aqueous hinokitiol solution, with the meat without the contact treatment with an aqueous hinokitiol solution (control).

The chicken breast meat was subjected to a contact treatment with the aqueous hinokitiol solution as follows. Specifically, 300 g of chicken breast meat was immersed at 10°C in 1 L of ion-exchanged water (control) or in 1 L of an aqueous hinokitiol solution (pH 6.5) containing 125 ppm or 1000 ppm hinokitiol, and the water or solution was stirred by a hand with a sterilized glove for 5 minutes.

Next, the chicken breast meat was drained for 1 minute. The surface color of the meat was determined by using a color reader. In addition, the surface color of the meat which had been roasted on a hot plate at 230°C for 10 minutes was determined in the same manner as above. The results are expressed by using standard color coordinates according to Lab color indication.

The above procedures were carried out using three different chicken breast meat for each case. The results are shown in Tables 2 and 3 as an average.

**Table 2**

| | Contact Treatment | L | a | b | ΔE |
|---|---|---|---|---|---|
| Raw | Control | 43.5 | 1.8 | 3.3 | - |
| Chicken | (ion-exchanged water) | | | | |
| Breast | Aqueous Hinokitiol | 42.8 | 1.1 | 2.7 | 1.16 |
| Meat Solution | (125 ppm) | | | | |
| Roasted | Control | 78.6 | 1.6 | 12.5 | - |
| Chicken | (ion-exchanged water) | | | | |
| Breast | Aqueous Hinokitiol | 77.9 | 1.7 | 12.4 | 0.71 |
| Meat | Solution (125 ppm) | | | | |

**Table 3**

| | Contact Treatment | L | a | b | ΔE |
|---|---|---|---|---|---|
| Raw | Control | 40.5 | 2 | 4.1 | - |
| Chicken | (ion-exchanged water) | | | | |
| Breast | Aqueous Hinokitiol | 40.9 | 0.8 | 3.8 | 1.30 |
| Meat Solution (1000 ppm) | | | | | |
| Roasted | Control | 80.3 | 2.3 | 11.5 | - |
| Chicken | (ion-exchanged water) | | | | |
| Breast | Aqueous Hinokitiol | 81.6 | 1.7 | 11.6 | 1.44 |
| Meat | Solution (1000 ppm) | | | | |

As shown in Tables 2 and 3, when the chicken breast meat subjected to a contact treatment with an aqueous hinokitiol solution is compared to that of the control, the ΔE (color difference) is 1.5 or less therebetween for all the cases. When the ΔE is less than 1.5, the color difference cannot be visually detected by human senses, so that it can be seen that the contact treatment of the chicken breast meat with an aqueous hinokitiol solution does not substantially affect the meat color.

Here, as to the measurement principle of the color difference meter and the interpretation of the measurement results based on the color coordinates according to Lab color indication, a reference is to be made on "Irotokusei-no Keisan-no Gaiyo (Summary of Calculation of Color Properties)" [internet home page <URL:http://www.nsg.co.jp/ntr/TIME/opt-01.htm>].

### Example 4 Influence 2 of Contact Treatment of Chicken Meat With Aqueous Hinokitiol Solution

The influence on taste of meat by the contact treatment of chicken meat with an aqueous hinokitiol solution was evaluated.

Specifically, a sensory test was carried out on roasted chicken breast meat which had been treated in the same manner as that for the evaluation of the influence on the meat color of the chicken breast meat. The evaluation was made on the influence on the taste of meat by comparing the meat subjected to a contact treatment with an aqueous hinokitiol solution with the meat without the contact treatment with an aqueous hinokitiol solution (control).

The sensory test was carried out by a standard triangle test. This test comprises two independent tests: In one test, two pieces of control chicken meat and one piece of chicken breast meat subjected to a contact treatment with an aqueous hinokitiol solution were eaten, and compared among them; in the other test, two pieces of chicken breast meat subjected to a contact treatment with an aqueous hinokitiol solution and one piece of control chicken meat were eaten, and compared among them. Six test panelists were subjected to the test once a day for three consecutive days for each of the cases where aqueous hinokitiol solutions were used at different concentrations, and such a test was carried out for a total of three times. In each test, the panelists judged whether or not the meat was the meat subjected to a contact treatment or the control meat on the basis of the evaluation criteria described in a literature (Amerine, M.A., Pangborn, R.M., and Roessler, E.B., "*Principles of Sensory Evaluation of Food*," Academic Press, New York, 1965, p. 357) (the panelists were not informed of how the meat was treated). All of the judgment results for 3 days for all panelists are tabulated and shown in Table 4 for each of correct judgments and incorrect judgments, expressed as the total number of panelists conducting each judgment.

**Table 4**

| Chicken Breast Meat | Correct Judgment | Incorrect Judgment |
|---|---|---|
| Two pieces of control (ion-exchanged water) meat and one piece of meat treated with aqueous hinokitiol solution (125 ppm) | 9 | 9 |
| One piece of control (ion-exchanged water) meat and two pieces of meat treated with aqueous hinokitiol solution (125 ppm) | 4 | 14 |
| Two pieces of control (ion-exchanged water) meat and one piece of meat treated with aqueous hinokitiol solution (1000 ppm) | 5 | 13 |
| One piece of control (ion-exchanged water) meat and two pieces of meat treated with aqueous hinokitiol solution (1000 ppm) | 9 | 9 |

A significance test was carried out by comparing the correct judgments and the incorrect judgments on the bases of the results shown in Table 4. As a result, there was no significant difference. Accordingly, it can be said that each panelist could not distinguish the chicken breast meat subjected to the contact treatment with an aqueous hinokitiol solution from the control chicken meat in any of the cases. Therefore, it can be seen that the contact treatment of the aqueous hinokitiol solution to the chicken breast meat does not substantially affect the taste of meat.

### INDUSTRIAL APPLICABILITY

The present invention provides a method of sterilizing poultry meat comprising the step of subjecting poultry meat to a contact treatment with an aqueous hinokitiol solution in poultry processing for a production of poultry meat. According to the present invention, the poultry meat can be sterilized safely and simply, and continuously and effectively.

## Claims

1. A method of sterilizing poultry meat comprising the step of subjecting poultry meat to a contact treatment with an aqueous hinokitiol solution in poultry processing for a production of poultry meat.

2. The method according to claim 1, wherein the contact treatment is carried out at least in one step in the poultry processing comprising plural treatment steps, and/or in one interval between consecutive two steps in the treatment steps.

3. The method according to claim 2, wherein the treatment step is selected from the group consisting of an evisceration step, a chilling step and a wrapping step.

4. The method according to claim 3, wherein the contact treatment is carried out in the interval between the evisceration step and the chilling step.

5. The method according to claim 3 or 4, wherein the contact treatment is carried out in the chilling step and/or in the interval between the chilling step and the wrapping step.

6. The method according to any one of claims 1 to 5, wherein the concentration of hinokitiol in the aqueous hinokitiol solution is from 1 to 50000 ppm.

7. The method according to any one of claims 1 to 6, wherein the aqueous hinokitiol solution has a pH of 4 to 11.

8. The method according to any one of claims 1 to 7, wherein the contact treatment is carried out at a temperature of 0° to 70°C.

9. The method according to any one of claims 1 to 8, wherein the contact treatment is carried out by at least one selected from the group consisting of applying a coat, spraying, rubbing and immersion.

10. A method for producing poultry meat comprising the step of sterilizing poultry meat by the method according to any one of claims 1 to 9 in poultry processing.
